Europäisches Patentamt

European Patent Office

Office européen des brevets

(11) Veröffentlichungsnummer: **0 254 834 B1**

(12) **EUROPÄISCHE PATENTSCHRIFT**

(45) Veröffentlichungstag der Patentschrift: **23.12.92**

(21) Anmeldenummer: **87107622.0**

(22) Anmeldetag: **26.05.87**

(51) Int. Cl.⁵: **G01B 21/00**, G01B 5/00

(54) **Längenmesseinrichtung.**

(30) Priorität: **30.07.86 DE 3625795**

(43) Veröffentlichungstag der Anmeldung:
**03.02.88 Patentblatt 88/05**

(45) Bekanntmachung des Hinweises auf die
Patenterteilung:
**23.12.92 Patentblatt 92/52**

(84) Benannte Vertragsstaaten:
**DE**

(56) Entgegenhaltungen:
**DE-A- 3 243 966**
**DE-A- 3 509 390**
**DE-C- 3 219 083**

(73) Patentinhaber: **Dr. Johannes Heidenhain
GmbH
Dr.-Johannes-Heidenhain-Strasse 5 Postfach
1260
W-8225 Traunreut(DE)**

(72) Erfinder: **Nelle, Günther, Dr.-Ing.
Eichenweg 12
W-8221 Bergen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung betrifft eine Längenmeßeinrichtung gemäß dem Oberbegriff des Anspruchs 1.

Derartige Längenmeßeinrichtungen werden insbesondere bei Bearbeitungsmaschinen zur Messung der Relativlage eines Werkzeugs bezüglich eines zu bearbeitenden Werkstücks sowie bei Koordinatenmeßmaschinen zur Ermittlung von Lage und/oder Abmessungen von Prüfobjekten eingesetzt.

Aus der DE-A-2 853 771 ist eine Längenmeßeinrichtung zur Messung der Relativlage zweier zueinander verschiebbarer Objekte bekannt, bei der eine am einen Objekt befestigte Abtasteinheit die Teilung eines an einem Träger angeordneten Maßstabs abtastet. Der Träger des Maßstabs ist an beiden Enden über jeweils ein Befestigungselement mit dem anderen Objekt verbunden. Während der Träger des Maßstabs am einen Ende direkt mit dem einen Befestigungselement verbunden ist, ist zwischen dem anderen Ende des Trägers und dem anderen Befestigungselement ein nur in Meßrichtung auslenkbares Längenausgleichselement angeordnet. Dieses plattenförmige Längenausgleichselement ist durch einen U-förmigen Schlitz in einen Innenteil und in einen Außenteil unterteilt; während der gegenüber dem Außenteil in Meßrichtung vorspringende Innenteil starr mit dem anderen Befestigungselement verbunden ist, ist der Außenteil starr am Träger des Maßstabs befestigt. Durch diese translatorisch bewegliche Lagerung des anderen Endes des Trägers nur in Meßrichtung mittels des Längenausgleichselements können keine durch thermische Längenänderungen des Trägers hervorgerufene Längskräfte trotz unterschiedlicher thermischer Ausdehnungskoeffizienten des Trägers und des anderen Objekts auftreten, so daß die Meßgenauigkeit nicht beeinträchtigt wird. Der feste Meßbezugspunkt an dem einen Ende des Maßstabs bezüglich des anderen Objekts wird durch die direkte Befestigung des einen Endes des Trägers des Maßstabs an dem einen Befestigungselement festgelegt.

In der DE-C-3 219 083 ist eine gleichartig aufgebaute Längenmeßeinrichtung beschrieben, bei der das Längenausgleichselement zwischen dem anderen Ende des Trägers und dem anderen Befestigungselement im anderen Befestigungselement integriert ist und aus einem Federelement in Form von in Ebenen etwa senkrecht zur Meßrichtung verlaufenden mäanderförmigen Schlitzen im anderen Befestigungselement besteht.

In der DE-A-3 243 966 ist eine Längenmeßeinrichtung zur Messung der Relativlage zweier zueinander verschiebbarer Objekte bekannt, bei der eine am einen Objekt befestigte Abtasteinheit die Teilung eines an einem Träger angeordneten Maßstabs abtastet. Der Träger des Maßstabs ist etwa in seiner Mitte über ein erstes Befestigungselement direkt mit dem anderen Objekt und an seinen beiden Enden mit weiteren am anderen Objekt angeordneten Befestigungselementen über je ein Längenausgleichselement zur tranlatorisch beweglichen Lagerung der beiden Enden des Trägers in Meßrichtung verbunden. Der feste Meßbezugspunkt in der Mitte des Maßstabs bezüglich des anderen Objekts wird durch die direkte Befestigung der Mitte des Trägers des Maßstabs mittels des ersten Befestigungselement am anderen Objekt festgelegt. Durch die translatorisch bewegliche Lagerung der beiden Enden des Trägers nur in Meßrichtung der beiden Längenausgleichselemente können keine durch thermische Längenänderungen des Trägers hervorgerufene Längskräfte trotz unterschiedlicher thermischer Ausdehungungskoeffizienten des Trägers und des anderen Objekts auftreten, so daß die Meßgenauigkeit nicht beeinträchtigt wird. Die beiden Längenausgleichselemente bestehen jeweils aus einem Federelement in Form von in Ebenen etwa senkrecht zur Meßrichtung verlaufenden mäanderförmigen Schlitzen und sind in den beiden weiteren Befestigungselementen integriert.

Bei den oben erwähnten Längenmeßeinrichtungen ist der feste Meßbezugspunkt des Maßstabs bezüglich des zu messenden Objekt bereits vom Hersteller konstruktionsmäßig bei der Auslieferung an den Anwender festgelegt. Die Lage des Meßbezugspunktes am Maßstab ist aber von der Art der Bearbeitungsmaschine und von der Anbaulage der Meßeinrichtung an den Maschinenteilen dieser Bearbeitungsmaschine abhängig, da die verschiedenen Maschinenteile, deren gegenseitige Relativlage gemessen werden soll, bei der gleichen Bearbeitungsmaschine und bei verschiedenen Bearbeitungsmaschinen im allgemeinen ein unterschiedlicher Temperaturverhalten aufweisen werden. Der Anwender muß daher bei der Bestellung einer solchen Längenmeßeinrichtung den für die jeweilige Anbaulage an der speziellen Bearbeitungsmaschine spezifischen Meßbezugspunkt am Maßstab angeben; eine Verwendung dieser Längenmeßeinrichtung in einer anderen Anbaulage an derselben Bearbeitungsmaschine oder an einer anderen Bearbeitungsmaschine ist daher wegen des im allgemeinen anderen Temperaturverhaltens nicht immer möglich.

Die Erfindung liegt die Aufgabe zugrunde, eine Längenmeßeinrichtung der genannten Gattung anzugeben, bei der die Lage des Meßbezugspunktes des Maßstabes an den Befestigungspunkten frei wählbar ist.

Diese Aufgabe wird erfindungsgemäß durch die kennzeichnenden Merkmale des Anspruches 1 gelöst.

Die mit der Erfindung erzielten Vorteile bestehen insbesondere darin, daß die Lage des Meßbezugspunktes am Maßstab vom Anwender selbst mit einfachen Mitteln, auch nach der Montage der Längenmeßeinrichtung an der Bearbeitungsmaschine, nach den jeweils vorliegenden Gegebenheiten an der Bearbeitungsmaschine eingestellt werden kann. Da die vorgeschlagene Längenmeßeinrichtung universell an jeder Bearbeitungsmaschine in jeder Anbaulage eingesetzt werden kann, erübrigen sich die Herstellung und Lagerhaltung von Längenmeßeinrichtungen mit unterschiedlichen spezifischen Meßbezugspunkten am Maßstab. Je nach dem Temperaturverhalten der jeweiligen Maschinenteile der Bearbeitungsmaschinen wird durch die variable Lage des Meßbezugspunktes am Maßstab eine optimale Befestigung des Maßstabes am zu messenden Maschinenteil ermöglicht, so daß trotz unterschiedlicher thermischer Ausdehnungskoeffizienten des Maßstabs oder des Trägers des Maßstabs und des zu messenden Objekts (Maschinenteils) keine durch thermische Längenänderungen des Maßstabs oder des Trägers des Maßstabs bedingte Meßfehler mehr auftreten können.

Vorteilhafte Weiterbildungen der Erfindung entnimmt man den abhängigen Ansprüchen.

Ausführungsbeispiele der Erfindung werden anhand der Zeichnung näher erläutert.

Es zeigen

Figur 1    eine inkrementale Längenmeßeinrichtung in einer Seitenansicht und

Figur 2    eine gekapselte inkrementale Längenmeßeinrichtung in einer Seitenansicht.

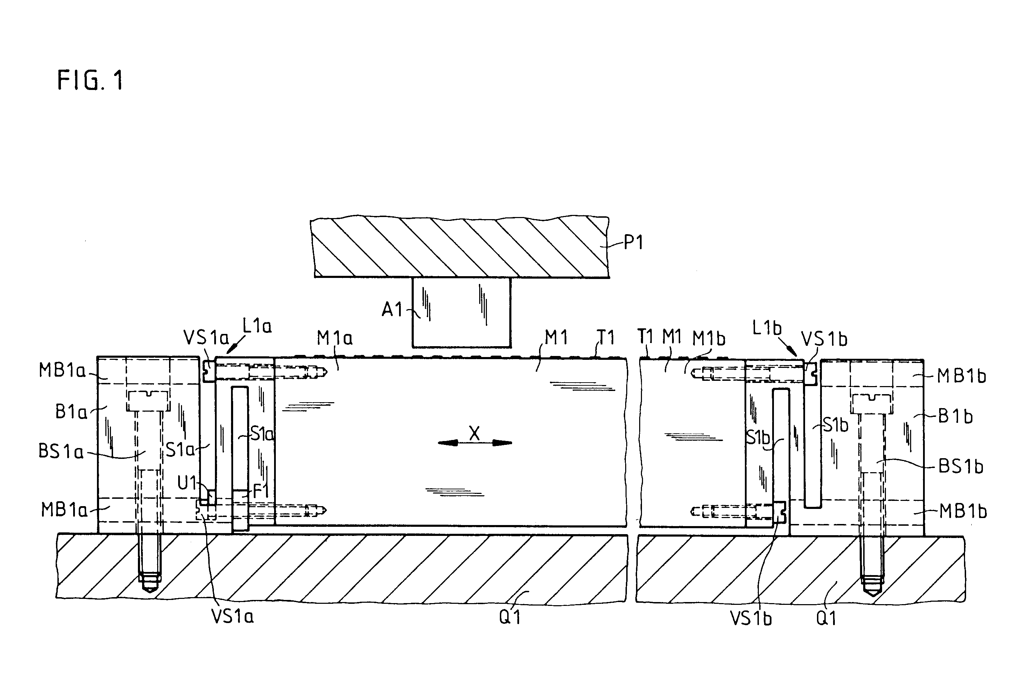

In Figur 1 ist in einer Seitenansicht eine inkrementale Längenmeßeinrichtung zur Messung der Relativlage zweier zueinander in Meßrichtung X verschiebbarer Objekte P1, Q1 dargestellte; das erste Objekt P1 werden durch einen Schlitten und das zweite Objekt Q1, beispielsweise aus Grauguß, durch das Maschinenbett einer nicht dargestellten Bearbeitungsmaschine gebildet. Eine an dem ersten Objekt P1 befestigte Abtasteinheit A1 tastet in bekannter Weise zur Messung der Relativlage der beiden Objekte P1, Q1 eine inkrementale Teilung T1 eines Maßstabs M1, beispielsweise aus Stahl, in Meßrichtung X ab, der am ersten Ende M1a mittels eines ersten Befestigungselements B1a und am zweiten Ende M1b mittels eines zweiten Befestigungselements B1b mit dem zweiten Objekt Q1 verbunden ist. Das erste Befestigungselement B1a sind mittels erster Befestigungsschrauben BS1a und das zweite Befestigungselement B1b mittels zweiter Befestigungsschrauben BS1b starr am zweiten Objekt Q1 befestigt. Der Maßstab M1 ist am ersten Ende M1a mittels erster Verbindungsschrauben VS1a mit dem ersten Befestigungselement B1a und am zweiten Ende M1b mittels zweiter Verbindungsschrauben VS1b mit dem zweiten Befestigungselement B1b verbundden.

Im ersten Befestigungselement B1a ist zwischen den ersten Befestigungsschrauben BS1a und dem ersten Ende M1a des Maßstabs M1 ein erstes Längenausgleichselement L1a in Form von in Ebenen etwa senkrecht zur Meßeinrichtung X verlaufenden ersten mäanderförmigen Schlitzten S1a integriert; desgleichen ist im zweiten Befestigungselement B1b zwischen den zweiten Befestigungsschrauben BS1b und dem zweiten Enden M1b des Maßstabs M1 ein zweites Längenausgleichselement L1b in Form von in Ebenen etwa senkrecht zur Meßrichtung X verlaufenden mäanderförmigen Schlitzen S1b integriert.

Die beiden Längenausgleichselemente L1a, L1b können, anstatt in den beiden Befestigungselementen B1a, B1b in bevorzugter Weise integriert zu sein, auch in nicht gezeigter Weise als separate Längenausgleichselemente zwischen den beiden Befestigungselementen B1a, B1b und den beiden Enden M1a, M1b des Maßstabs M1 angeordnet sein.

Die beiden Längenausgleichselemente L1a, L1b in den beiden Befestigungselementen B1a, B1b bewirken eine translatorisch bewegliche Lagerung der beiden Enden M1a, M1b des Maßstabs M1 in Meßrichtung X, so daß wegen der unterschiedlichen thermischen Ausdehnungskoeffizienten des Maßstabes M1 und des zweiten Objekts Q1 aufgrund ihrer unterschiedlicher Materialien bei temperaturbedingten Längenänderungen des Maßstabs M1 bezüglich des zweiten Objekts Q1 keine Längskräfte im Maßstab M1 auftreten könne, die zu Meßungenauigkeiten führen können.

Zur Messung der Relativlage der beiden Objekts P1, Q1 muß je nach dem Temperaturverhalten des zweiten Objekts Q1 ein bestimmter Meßbezugspunkt (Nullpunkt) der Teilung T1 des Maßstabs M1 bezüglich des zweiten Objekts Q1 festgelegt werden. In Figur 1 möge dieser feste Meßbezugspunkt der Teilung T1 bezüglich des zwei Objekts Q1 am ersten Ende M1a des Maßstabs M1 liegen. Zu diesem Zweck wird vorgeschlagen, das erste Längenausgleichselement L1a durch ein Fixierelement F1 unwirksam zu machen. Die beiden unteren ersten Verbindungsschrauben VS1a, deren Schraubenköpfe sich im wirksamen Zustand des ersten Längenausgleichselement L1a in dem dem ersten Ende M1a des Maßstabs M1 zugewandten ersten mäanderförmigen Schlitz S1a befinden, werden gelöst und aus ihren Montagebohrungen MB1a herausgezogen.

Das Fixierelement F1 besteht aus einer Platte, deren Dicke der Breite des dem ersten Ende M1a des Maßstabs M1 zugewandten ersten mäanderförmigen Schlitzes S1a in Meßrichtung X entspricht. Nachdem das Fixierelement F1 in diesen ersten mäanderförmigen Schlitz S1a eingeschoben worden ist, werden die beiden unteren ersten Verbindungsschrauben VS1a jeweils mit einer Unterlegscheibe U1 versehen, in ihre Montagebohrungen MB1a eingesetzt und befestigt. Wegen der beiden Unterlegscheiben U1 befinden sich die beiden Schraubenköpfe der beiden unteren ersten Verbindungsschrauben VS1a jetzt in dem dem ersten Ende M1a des Maßstabs M1 abgewandten ersten mäanderförmigen Schlitz S1a, so daß das Fixierelement F1 durch das Festziehen der beiden unteren ersten Verbindungsschrauben VS1a in dem dem ersten Ende M1a des Maßstabs M1 zugewandten ersten mäanderförmigen Schlitz S1a geklemmt wird. Das Fixierelement F1 macht somit das erste Längenausgleichselement L1a unwirksam, indem es die translatorische Bewegungsmöglichkeit des ersten Endes M1a des Maßstabes M1 verhindert, so daß die Teilung T1 am ersten Ende M1a des Maßstabs M1 einen festen Meßbezugspunkt bezüglich des zweiten Objekts Q1 aufweist.

Wird die Längenmeßeinrichtung in einer anderen Anbaulage an diesem zweiten Objekt Q1 oder an einem anderen zweiten Objekt Q1 derselben Bearbeitungsmaschine oder einer anderen unterschiedlichen Bearbeitungsmaschine befestigt, so möge wegen des anderen Temperaturganges des zweiten Objekts Q1 bei dieser neuen Anbaulage der Meßbezugspunkt der Teilung T1 am zweiten Ende M1b des Maßstabs M1 liegen. Zu diesem Zweck wird das zweite Längenausgleichselement L1b unwirksam gemacht, indem das Fixierelement F1 aus dem ersten Längenausgleichselement L1a entfernt und in der oben beschriebenen Weise in das zweite Längenausgleichselement L1b eingebaut wird.

In ihrer wirksamen Funktion sind die beiden Längenausgleichselemente L1a, L1b gleichartig, aber zueinander seitenverkehrt aufgebaut. Die mäanderförmigen Schlitze S1a, S1b der beiden Längenausgleichselemente L1a, L1b ermöglichen neben den translatorischen Freiheitsgraden für die beiden Enden M1a, M1b des Maßstabs M1 in Meßrichtung X auch eine gewisse Winkelbeweglichkeit der beiden Befestigungselemente B1a, B1b bezüglich des Maßstabs M1 in einer Ebene parallel zur Meßrichtung X und senkrecht zur Anbaufläche der beiden Befestigungselemente B1a, B1b am zweiten Objekt Q1 und erlauben damit einen spannungsfreien Anbau des Maßstabs M1 am zweiten Objekt Q1. Diese Winkelbeweglichkeit der beiden Befestigungselement B1a, B1b ist sowohl in ihrer wirksamen Funktion als auch in ihrer unwirksamen Funktion vorhanden.

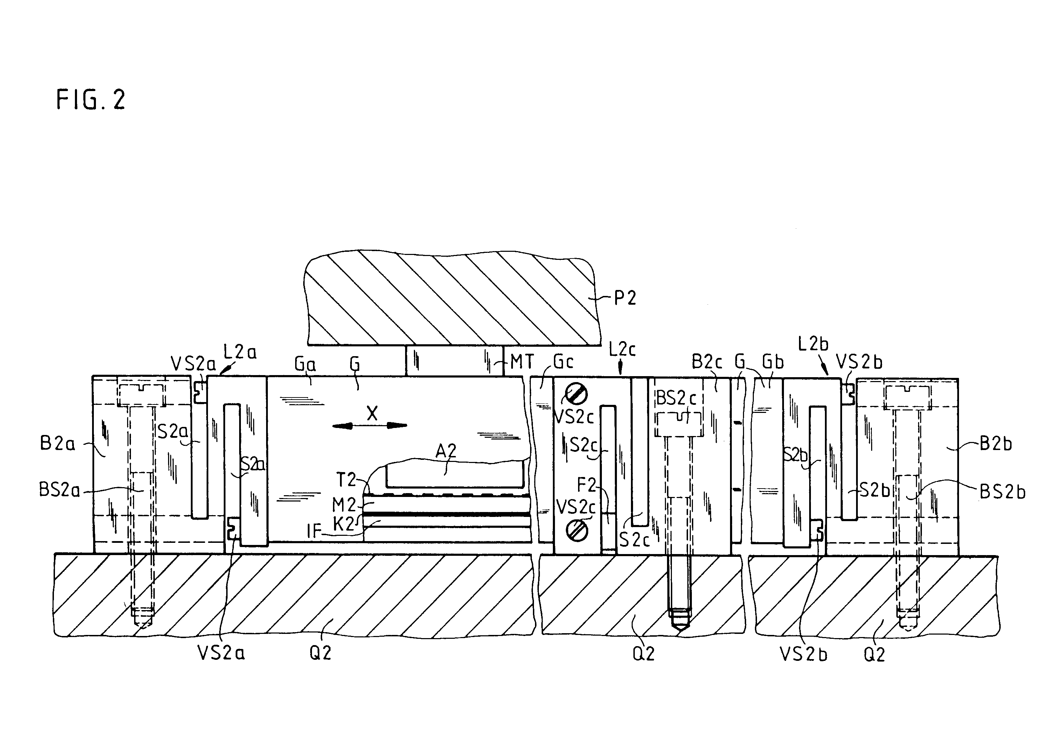

In Figur 2 ist in einer Seitenansicht eine gekapselte inkrementale Längenmeßeinrichtung zur Messung der Relativlage zweier zueinander in Meßrichtung X verschiebbarer Objekte P2, Q2 in Form eines Schlittens und eines Maschinenbetts, beispielsweise aus Grauguß, einer nicht dargestellten Bearbeitungsmaschine gezeigt. Ein Träger G für einen Maßstab M2, beispielsweise aus Glas, ist als Gehäuse für dessen Maßstab M2 in Form eines biegesteifen langgestreckten Hohlprofils, beispielsweise aus Aluminium, ausgebildet. Im Inneren des Gehäuses G ist der Maßstab M2 mit einer inkrementalen Teilung T2 mittels einer elastischen Klebeschicht K2 auf einer Innenfläche IF des Gehäuses G befestigt. Eine an dem ersten Objekt P2 über einen schwertförmigen Mitnehmer MT befestigte Abtasteinheit A2 tastet im Inneren des Gehäuses G in bekannter Weise die Teilung T2 des Maßstabs M2 in Meßrichtung X zur Messung der Relativlage der beiden Objekte P2, Q2 ab.

Das Gehäuse G für den Maßstab M2 ist am ersten Ende Ga mittels eines ersten Befestigungselements B2a und am zweiten Ende Gb mittels eines zweiten Befestigungselements B2b mit dem zweiten Objekt Q2 verbunden. Das erste Befestigungselement B2a sind mittels erster Befestigungsschrauben BS2a und das zweite Befestigungselement B2b mittels zweiter Befestigungsschrauben BS2b starr am zweiten Objekt Q2 befestigt. Das Gehäuse G ist am ersten Ende Ga mittels erster Verbindungsschrauben VS2a mit dem ersten Befestigungselement B2a und am zweiten Ende Gb mittels zweiter Verbindungsschrauben VS2b mit dem zweiten Befestigungselement B2b verbunden.

Im ersten Befestigungselement B2a ist zwischen den ersten Befestigungsschrauben BS2a und dem ersten Ende Ga des Gehäuses G ein erstes Längenausgleichselement L2a in Form von in Ebenen etwa senkrecht zur Meßrichtung X verlaufenden ersten mäanderförmigen Schlitzen S2a integriert; desgleichen ist im zweiten Befestigungselement B2b zwischen den zweiten Befestigungsschrauben BS2b und dem zweiten Ende Gb des Gehäuses G ein zweites Längenausgleichselement L2b in Form von in Ebenen etwa senkrecht zur Meßrichtung X verlaufenden zweiten mäanderförmigen Schlitzten S2b integriert.

Die beiden Längenausgleichselemente L2a, L2b können, anstatt in den beiden Befestigungselementen B2a, B2b in bevorzugter Weise integriert zu sein, auch in nicht gezeigter Weise als separate Längenausgleichselemente zwischen den beiden Befestigungselementen B2a, B2b und den beiden Enden Ga, Gb des Gehäuses G angeordnet sein.

Die beiden Längenausgleichselemente L2a, L2b in den beiden Befestigungselementen B2a, B2b bewirken eine translatorisch bewegliche Lagerung der beiden Enden Ga, Gb des Gehäuses G in Meßrichtung X, so daß wegen der unterschiedlichen thermischen Ausdehungskoeffizienten des Gehäuses G und des zweiten Objekts Q2 aufgrund ihrer unterschiedlichen Materialien bei temperaturbedingten Längenänderungen des Gehäuses G bezüglich des zweiten Objekts Q2 keine Längskräfte im Gehäuse G auftreten können, die zu Meßungenauigkeiten führen können.

Etwa in der Mitte Gc des Gehäuses G ist ein drittes Befestigungselement B2c mittels dritter Befestigungsschrauben BS2c starr am zweiten Objekt Q2 befestigt. Die Mitte Gc des Gehäuses G ist mittels dritter Verbindungsschrauben VS2c mit dem dritten Befestigungselement B2c verbunden. Im dritten Befestigungselement B2c ist zwischen den dritten Befestigungsschrauben BS2c und der Mitte Gc des Gehäuses G ein drittes Längenausgleichselement L2c in Form von in Ebenen etwa senkrecht zur Meßrichtung X verlaufenden dritten mäanderförmigen Schlitzen S2c integriert. Das dritte Längenausgleichselement L2c kann, anstatt im dritten Befestigungselement B2c in bevorzugter Weise integriert zu sein, auch in nicht gezeigter Weise als separates drittes Längenaugleichselement zwischen dem dritten Befestigungselement B2c und der Mitte Gc des Gehäuses G angeordnet sein. Das dritte Längenausgleichselement L2c bewirkt ebenfalls eine translatorisch bewegliche Lagerung der Mitte Gc des Gehäuses G in Meßrichtung X. In Figur 2 möge der feste Meßbezugspunkt der Teilung T2 des Maßstabs M2 bezüglich des zweiten Objekts Q2 in der Mitte der Teilung T2 und damit in der Mitte Gc des Gehäuses G liegen. Zu diesem Zweck wird vorgeschlagen, das dritte Längenausgleichselement L2c durch ein Fixierelement F2 unwirksam zu machen. Das Fixierelement F2 besteht aus einer Platte, deren Dicke der Breite des der Mitte Gc des Gehäuses G zugewandten dritten mäanderförmigen Schlitzes S2c in Meßrichtung X entspricht. Das Fixierelement F2 wird in diesen dritten mäanderförmigen Schlitz S2c eingeschoben und mittels nicht dargestellter Elemente geklemmt. Das Fixierelement F2 macht somit das dritte Längenausgleichselement L2c unwirksam, indem es die translatorische Bewegungsmöglichkeit der Mitte Gc des Gehäuses G unterbindet, so daß die Teilung T2 in ihrer Mitte einen festen Meßbezugspunkt bezüglich des zweiten Objekts Q2 aufweist.

Wird wegen anderen Anbaulagen der Längenmeßeinrichtung am zweiten Objekt Q2 derselben Bearbeitungsmaschine oder einer anderen Bearbeitungsmaschine ein anderer Meßbezugspunkt für die Teilung T2 des Maßstabs M2 erforderlich, so kann das Fixierelement F2 aus dem dritten Längenausgleichselement L2c entfernt und in das erste Längenausgleichselement L2a oder in das zweite Längenausgleichselement L2b eingebaut werden; der Einbau des Fixierelements F2 in das erste Längenausgleichselement L2a oder in das zweite Längenausgleichselement L2b erfolgt in der gleichen Weise, wie es bei den beiden Längenausgleichselementen L1a, L1b der Figur 1 beschrieben worden ist, da die beiden Längenausgleichselemente L1a, L1b der Figur 1 mit den beiden Längenausgleichselementen L2a, L2b der Figur 2 identisch sind. Mittels des Fixierelements F2 kann somit eines der drei Längenausgleichselemente L2a, L2b, L2c in seiner Funktion nach Maßgabe des erforderlichen Meßbezugspunktes der Teilung T2 des Maßstabs M2 aufgrund des jeweiligen Temperaturganges des zweiten Objektes Q2 bei der vorliegenden Anbaulage der Längenmeßeinrichtung am zweiten Objekt Q2 unwirksam gemacht werden.

In ihrer wirksamen Funktion sind das erste Längenausgleichselement L2a und das zweite Längenausgleichselement L2b an den beiden Enden Ga, Gb des Gehäuses G gleichartig, aber zueinander seitenverkehrt aufgebaut. Die mäanderförmigen Schlitze S2a, S2b, S2c der drei Längenausgleichselemente L2a, L2b, L2c ermöglichen neben den translatorischen Freiheitsgraden für die beiden Enden Ga, Gb und für die Mitte Gc des Gehäuses G in Meßrichtung X ebenfalls eine gewisse Winkelbeweglichkeit der drei Befestigungselemente B2a, B2b, B2c bezüglich des Gehäuses G in einer Ebene parallel zur Meßrichtung X und senkrecht zur Anbaufläche der drei Befestigungselemente B2a, B2b, B2c am zweiten Objekt Q2 und erlauben damit einen spannungsfreien Anbau des Gehäuses G am zweiten Objekt Q2. Diese Winkelbeweglichkeit der drei Befestigungselemente B2a, B2b, B2c ist sowohl in ihrer wirksamen Funktion als auch in ihrer wirksamen Funktion vorhanden.

In nicht gezeigter Weise kann auch bei der Längenmeßeinrichtung gemäß Figur 1 ein drittes Befestigungselement mit einem Längenausgleichselement in der Mitte des Maßstabs M1 vorgesehen sein. Die dritten Befestigungselement mit Längenausgleichselementen können je nach den erforderlichen Lagen der Meßbezugspunkte auch außerhalb der Mitten des Maßstabes M1 oder des Gehäuses G angeordnet sein; desgleichen können zwischen den Enden M1a, M1b des Maßstabes M1 und zwischen den Enden Ga, Gb des Gehäuses G noch weitere Befestigungselemente mit Längenausgleichselementen vorgesehen sein, was sich insbesondere bei großen Meßlängen der Längenmeßeinrichtung empfiehlt.

Der Anwender kann bei Bedarf in nicht gezeigter Weise auch mehr als ein Längenausgleichselement durch Fixierelemente in ihrer Funktion unwirksam machen.

Die Erfindung ist mit Erfolg insbesondere bei absoluten und bei inkrementalen Längenmeßeinrichtungen einsetzbar, die auf dem lichtelektrischen, magnetischen, kapazitiven oder induktiven Meßprinzip beruhen.

**Patentansprüche**

1. Längenmeßeinrichtung zur Messung der Relativlage zweier zueinander verschiebbarer Objekte (P, Q), bei der eine am ersten Objekt (P) befestigte Abtasteinheit (A) die Teilung (T) eines Maßstabes (M) abtastet, der mittels Befestigungselemente (B) mit dem zweiten Objekt (Q) verbunden ist, wobei Längenausgleichselemente (L) zur translatorisch beweglichen Lagerung des Maßstabes (M) in Meßrichtung X vorgesehen sind, dadurch gekennzeichnet, daß wenigstens zwei Befestigungselementen (B1a, B1b; B2a, B2b, B2c) jeweils ein Längenausgleichselement (L1a, L1b; L2a, L2b, L2c) zugeordnet ist, daß wenigstens ein Längenausgleichselement (L1a; L2c) durch ein Fixierelement (F1; F2) unwirksam gemacht ist und daß wenigstens ein Längenausgleichselement (L1b; L2a, L2b) wirksam ist.

2. Meßeinrichtung nach Anspruch 1, dadurch gekennzeichnet, daß die Längenausgleichselemente (L1a, L1b; L2a, L2b, L2c) in Ebenen etwa senkrecht zur Meßrichtung X verlaufende mäanderförmige Schlitze (S1a, S1b; S2a, S2b, S2c) aufweisen.

3. Meßeinrichtung nach Anspruch 1 und 2, dadurch gekennzeichnet, daß die Längenausgleichselemente (L1a, L1b; L2a, L2b, L2c) in den zugehörigen Befestigungselementen (B1a, B1b; B2a, B2b, B2c) integriert sind.

4. Meßeinrichtung nach Anspruch 1, dadurch gekennzeichnet, daß das Fixierelement (F1; F2) aus einer Platte besteht, deren Dicke der Breite der mäanderförmigen Schlitze (S1a, S1b; S2a, S2b, S2c) der Längenausgleichselemente (L1a, L1b; L2a, L2b, L2c) in Meßrichtung X entspricht.

5. Meßeinrichtung nach Anspruch 4, dadurch gekennzeichnet, daß das Fixierelement (F1; F2) in den Schlitzen (S1a, S2c) der Längenausgleichselemente (L1a, L2c) durch Klemmelemente (VS1a) geklemmt ist.

6. Meßeinrichtung nach Anspruch 1, dadurch gekennzeichnet, daß der Maßstab (M2) in einem Gehäuse (G) als Träger für den Maßstab (M2) mittels einer elastischen Klebeschicht (KS) befestigt ist und daß an den beiden Enden (Ga, Gb) und in der Mitte (Gc) des Gehäuses (G) jeweils ein Befestigungselement (B2a, B2b, B2c) mit jeweils einem Längenausgleichselement (L2a, L2b, L2c) angeordnet ist.

**Claims**

1. A length measuring device for measuring the relative position of two objects (P, Q) movable relative to one another, in which a sensing unit (A) fixed to the first object (P) senses the graduation (T) of a measuring scale (M) which is connected to the second object (Q) by means of fixing elements (B), wherein length compensating elements (L) for mounting the measuring scale (M) for movement in translation in the measuring direction X are provided, characterized in that a length compensating element (L1a, L1b; L2a, L2b, L2c) is associated with each of at least two fixing elements (B1a, B1b; B2a, B2b, B2c), in that at least one length compensating element (L1a; L2c) is rendered ineffective by an immobilising element (F1; F2) and in that at least one length compensating element (L1b; L2a, L2b) remains operative.

2. A measuring device according to claim 1, characterized in that the length compensating elements (L1a, L1b; L2a, L2b, L2c) have meandering slots (S1a, S1b; S2a, S2b, S2c) in planes approximately perpendicular to the measuring direction X.

3. A measuring device according to claims 1 and 2, characterized in that the length compensating elements (L1a, L1b; L2a, L2b, L2c) are integrated into the associated fixing elements (B1a, B1b; B2a, B2b, B2c).

4. A measuring device according to claim 1, characterized in that the immobilising element (F1; F2) consists of a plate whose thickness corresponds to the width in the measuring direction X of the meandering slots (S1a, S1b; S2a, S2b, S2c) of the length compensating elements (L1a, L1b; L2a, L2b, L2c).

5. A measuring device according to claim 4, characterized in that the immobilising element (F1; F2) is clamped in the slots (S1a, S2c) of the length compensating elements (L1a, L2c) by clamp elements (VS1a).

6. A measuring device according to claim 1, characterized in that the measuring scale (M2) is fixed by means of an elastic adhesive layer (KS) in a housing (G) acting as carrier for the measuring scale (M2) and in that fixing elements (B2a, B2b, B2c), each with a length compensating element (L2a, L2b, L2c), are arranged at each of the two ends (Ga, Gb) and in the middle (Gc) of the housing (G).

**Revendications**

1. Dispositif de mesure de longueurs pour la mesure de la position relative de deux objets (P, Q) pouvant se déplacer l'un par rapport à l'autre, dans lequel une unité de lecture (A) liée au premier objet (P) lit la graduation (T) d'une règle graduée (M) qui est liée au deuxième objet (Q) au moyen d'éléments de fixation (B), des éléments de compensation (L) étant prévus pour le montage avec possibilité de déplacement en translation de la règle graduée (M) dans la direction de la mesure X, caractérisé par le fait qu'à au moins deux éléments de fixation (B1a, B1b; B2a, B2b, B2c) est associé respectivement un élément de compensation (L1a, L1b; L2a, L2b, L2c), qu'au moins un élément de compensation (L1a; L2c) est rendu inopérant au moyen d'un élément de blocage (F1; F2) et qu'au moins un élément de compensation (L1b; L2a, L2b) est actif.

2. Dispositif de mesure selon la revendication 1, caractérisé par le fait que les éléments de compensation (L1a, L1b; L2a, L2b, L2c) présentent des fentes (S1a, S1b; S2a, S2b, S2c) qui sont disposées en serpentin dans des plans sensiblement perpendiculaires à la direction de mesure X.

3. Dispositif de mesure selon les revendications 1 et 2, caractérisé par le fait que les éléments de compensation (L1a, L1b; L2a, L2b, L2c) sont intégrés aux éléments de fixation (B1a, B1b; B2a, B2b, B2c) correspondants.

4. Dispositif de mesure selon la revendication 1, caractérisé par le fait que l'élément de blocage (F1; F2) est constitué par une plaque dont l'épaisseur correspond à la largeur des fentes (S1a, S1b; S2a, S2b, S2c) en serpentin des éléments de compensation (L1a, L1b; L2a, L2b, L2c) dans la direction de mesure X.

5. Dispositif de mesure selon la revendication 4, caractérisé par le fait que l'élément de blocage (F1; F2) est fixé dans les fentes (S1a, S1c) des éléments de compensation (L1a, L2c) au moyen d'éléments de fixation (VS1a).

6. Dispositif de mesure selon la revendication 1, caractérisé par le fait que la règle graduée (M2) est fixée dans un boîtier (G) servant de support à la règle (M2) au moyen d'une couche d'adhésif (KS) élastique et qu'un élément de fixation (B2a, B2b, B2c) comportant chaque fois un élément de compensation (L2a, L2b, L2c) est disposé aux deux extrémités (Ga, Gb) et au milieu (Gc) du boîtier (G).

FIG. 1

EP 0 254 834 B1

EP 0 254 834 B1

FIG. 2